# EUROPEAN PATENT SPECIFICATION

(11) **EP 2 810 702 B1**
(45) Date of publication and mention of the grant of the patent: **12.04.2017**
(21) Application number: 13743165.6
(22) Date of filing: 29.01.2013
(51) Int. Cl.: B01D 69/10, B01D 71/48, D04H 1/435, D04H 1/542, D21H 13/24, D04H 1/64, B32B 5/02, B32B 27/12, D04H 1/44, D21H 25/04

(54) **NON-WOVEN FABRIC FOR SEMIPERMEABLE MEMBRANE SUPPORT**
VLIESSTOFF FÜR DEN TRÄGER EINER HALBDURCHLÄSSIGEN MEMBRAN
TISSU NON-TISSÉ POUR SUPPORT DE MEMBRANE SEMI-PERMÉABLE

(30) Priority: 30.01.2012 JP 2012017209
(43) Date of publication of application: 10.12.2014
(73) Proprietor: Hokuetsu Kishu Paper Co., Ltd., Nagaoka-shi Niigata 940-0027 (JP)
(72) Inventor: SOYAMA, Toshihiko, Nagaoka-shi Niigata 940-0027 (JP); NEMOTO, Junji, Nagaoka-shi Niigata 940-0027 (JP); HAMABE, Hisashi, Tokyo 103-0021 (JP)
(74) Representative: Michalski Hüttermann & Partner Patentanwälte mbB
(86) International application number: PCT/JP2013/051815
(87) International publication number: WO 2013/115149

(56) References cited:
- EP-A1- 2 659 955
- WO-A1-2011/049231
- CA-A1- 1 098 771
- FR-A1- 2 372 922
- JP-A- 2009 233 666

## Description

### TECHNICAL FIELD

The present invention relates to a non-woven fabric, and more particularly, to a non-woven fabric for semipermeable membrane support intended for serving as a support for membrane production and reinforcing a semipermeable membrane in the production of a semipermeable membrane having an isolating function, such as an ultrafiltration membrane, a precision filtration membrane, or a reverse osmosis (RO) membrane.

### BACKGROUND ART

Semipermeable membranes are widely used for the removal of impurities in beverages/industrial water, desalination of seawater, removal of saprophytic bacteria in foodstuffs, and a waste water treatment, or in the field of biochemistry and the like.

For the semipermeable membranes, various polymers such as a cellulose-based resin, a polyvinyl alcohol-based resin, a polysulfone-based resin, a polyamide-based resin, a polyimide-based resin, a polyacrylonitrile-based resin, a polyester-based resin, and a fluororesin are selected in accordance with the use. However, the membrane itself has weak strength, and cannot endure a high pressure such as 1 MPa to 10 MPa or more when used alone in ultrafiltration, reverse osmosis or the like. Thus, products in the form of having a semipermeable membrane formed by applying a resin liquid for a semipermeable membrane on one surface of a support having high strength and high liquid permeability, such as a non-woven fabric or a woven fabric, are in use.

In order to obtain the liquid permeability and filtration performance required for a semipermeable membrane, it is necessary that a semipermeable membrane be formed at a uniform thickness on a semipermeable membrane support. Therefore, high smoothness is required for the surface where a semipermeable membrane will be coated in the semipermeable membrane support (hereinafter, also referred to as a semipermeable membrane-coated surface or simply as a coated surface). Furthermore, adhesiveness of the semipermeable membrane to the support (= anchor effect) is also required. However, if the semipermeable membrane support is made excessively smooth, when the semipermeable membrane coating liquid is applied, it becomes difficult for the coating liquid to cling to the support, adhesiveness of the semipermeable membrane to the support becomes poor, and the semipermeable membrane becomes easily detachable from the support. To the contrary, when the smoothness of the support is lowered, it becomes easy for a resin liquid to cling to the support by the anchor effect, and adhesiveness is improved. However, uniformity of the semipermeable membrane is deteriorated, and there occurs a problem that the coating liquid to be applied bleeds into the interior of the support and thereby permeates through to the non-coated surface. That is, in regard to the smoothness of the semipermeable membrane-coated surface, uniformity of the thickness of the semipermeable membrane and the adhesiveness of the semipermeable membrane to the support are in a contradictory relationship.

It has been suggested to improve the adhesiveness of a semipermeable membrane coating liquid to a support by roughening the coated surface by adjusting the difference in the surface roughness between the semipermeable membrane-coated surface of a non-woven fabric for semipermeable membrane support and a non-coated surface to 15% (see, for example, Patent Literature 1).

As a non-woven fabric for semipermeable membrane support, a support based on a bilayer structure of a front surface layer which uses a fiber having a larger diameter and has large surface roughness; and a back surface layer which uses a fiber having a finer diameter and has a dense structure, has been suggested (see, for example, Patent Literature 2).

As a non-woven fabric for semipermeable membrane support, there has been suggested a support characterized by containing two or more kinds of main constituent synthetic fibers having different fiber diameters and a binder synthetic fiber, and being formed from a non-woven fabric in which the ratio of smoothness between a semipermeable membrane-coated surface and a non-coated surface is 5.0:1.0 to 1.1:1.0 (see, for example, Patent Literature 3).

There has been suggested a support in which the average value of breaking lengths in the longitudinal direction (MD) and the transverse direction (CD) at the time of 5% elongation is 4.0 km or more, and the degree of air permeability is 0.2 cc/cm²·sec to 10.0 cc/cm²·sec (see, for example, Patent Literature 4).

There has been suggested a support in which adhesiveness to a semipermeable membrane has been increased by incorporating an atypically shaped cross-section fiber on the coated surface side layer of the semipermeable membrane (see, for example, Patent Literature 5).

There has been suggested a support having a three-layer structure in which an intermediate layer includes a melt-blown fiber having a fiber diameter of 5 µm or less (see, for example, Patent Literature 6).

There has been suggested a support in which prevention of the permeation-through of a semipermeable membrane coating liquid is attempted by incorporating pulp for papermaking into a layer on the non-coated surface side of the support having a multilayer structure (see, for example, Patent Literature 7).

### CITATION LIST

### PATENT LITERATURE

Patent Literature 1: JP 2002-95937 A
Patent Literature 2: JP 60-238103 A
Patent Literature 3: WO 2011/049231 A
Patent Literature 4: JP 10-225630 A
Patent Literature 5: JP 11-347383 A
Patent Literature 6: WO 2006/068100 A
Patent Literature 7: JP 2009-178915 A
Patent Literature 8: FR 2 372 922 A1 describes a non-woven material and a method for making it, for use a semipermeable membrane which comprises binding fibres.
Patent Literature 9: CA 1 098 771 A1 describes a non-woven material which is particularly suitable for backing or supporting a semipermeable membrane at least one surface of which has an openstructured, continuous, calendered coating of fine thermoplastic particles.
Patent Literature 10: EP 2 659 955 A1 describes a uniform semipermeable membrane supporting body which does not cause any defect in the semipermeable membrane coating layer when a semipermeable membrane coating liquid is applied, and is free of low density defects.

### SUMMARY OF INVENTION

### TECHNICAL PROBLEM

The technology of Patent Literature 1 has a problem that since the coated surface of the support is rough, the thickness uniformity of the semipermeable membrane is deteriorated.

The technology of Patent Literature 2 is intended to improve the adhesiveness of the semipermeable membrane coating liquid to the support by means of the front surface
layer having high surface roughness. However, similarly, this also has a problem that the thickness uniformity of the semipermeable membrane is deteriorated because the coated surface of the support is rough.

In the technology of Patent Literature 3, contrary to Patent Literatures 1 and 2, the side of the semipermeable membrane-coated surface is smoother than the non-coated surface. However, since incorporating a fiber having a large diameter generally increases air permeability of the support and decreases compactness, there is a problem that even if the smoothness of the coated surface is increased, the thickness uniformity of the coated semipermeable membrane is not so much improved.

In the technology of Patent Literature 4, the support has high strength and exhibits an effect of having small elongation; however, since the semipermeable membrane-coated surface and the non-coated surface have the same smoothness, the relationship between the thickness uniformity of the semipermeable membrane and the adhesiveness of the semipermeable membrane to the support is fundamentally not addressed.

In the technology of Patent Literature 5, there is a problem that surface unevenness of the atypically shaped cross-section fiber deteriorates the thickness uniformity of the semipermeable membrane.

In the technology of Patent Literature 6, an effect of preventing permeation-through of the semipermeable coating liquid and an anchor effect can be obtained. However, since a fiber having a fine diameter is used in the intermediate layer, there is a problem that air permeability of the support becomes poor.

In the technology of Patent Literature 7, there is a problem that when the sheet containing pulp for papermaking is wetted with water upon actual use, the decrement in the strength of the sheet is increased, and air permeability becomes poor.

Regarding a non-woven fabric for semipermeable membrane support, there is a demand for a non-woven fabric in which adhesiveness of a semipermeable membrane to a support is satisfactory, the thickness uniformity of the semipermeable membrane is satisfactory, and permeation-through of a coating liquid does not occur. An object of the present invention is to provide a non-woven fabric for semipermeable membrane support, in which adhesiveness of a semipermeable membrane to a support is satisfactory, the thickness uniformity of the semipermeable membrane is satisfactory, and permeation-through of a coating liquid does not occur.

### SOLUTION TO PROBLEM

The object is solved by the features of the independent claim. Preferred embodiments are defined by the features of the dependent claims.

A non-woven fabric for semipermeable membrane support according to the present invention includes a non-woven fabric containing organic synthetic fibers as a primary component, wherein a semipermeable membrane is to be supported by one surface of the non-woven fabric, wherein the coated surface to be coated with the semipermeable membrane of the non-woven fabric and the non-coated surface that is opposite to the coated surface of the non-woven fabric both have a Bekk smoothness of 5 seconds or more, and the non-woven fabric has an internal bond strength in the sheet transverse direction in the range from 0.4 to 0.8 N·m. The sheet transverse direction herein means the width direction (Cross Direction) of the sheet during the production of the non-woven fabric.

In regard to the non-woven fabric for semipermeable membrane support according to the present invention, the non-woven fabric is preferably a wet laid non-woven fabric. In a wet laid non-woven fabric, since organic synthetic fibers as cut short fibers constitute a primary constituent element, air permeability of the middle layer is likely to be increased, and an anchor effect is likely to be exhibited.

In regard to the non-woven fabric for semipermeable
membrane support according to the present invention, it is preferable that the non-woven fabric before being subjected to a hot press processing have a single layer structure. When hot press processing is carried out using a thermal calender, if the non-woven fabric has a single layer structure, the way of heat propagation is uniform, and accordingly, control of the pressure drops of the various layer regions based on the processing conditions can be easily implemented.

In regard to the non-woven fabric for semipermeable membrane support according to the present invention, the organic synthetic fibers contain a main constituent fiber and a binder fiber, and the mixing ratio of the main constituent fiber to the sum of the main constituent fiber and the binder fiber {main constituent fiber/(main constituent fiber + binder fiber)} is 50% by mass or more and lower than 100% by mass. It is possible to conduct melt adhesion of the fibers at a lower temperature than the melting point of the main constituent fiber.

In regard to the non-woven fabric for semipermeable membrane support according to the present invention, it is preferable that, when the non-woven fabric to be coated with a semipermeable membrane is divided, in the thickness direction, into a coated layer region on the side on which the semipermeable membrane is to be disposed, a middle layer region, and a non-coated layer region on the side opposite to the surface on which the semipermeable membrane is to be disposed, the degree of thermal melting of the organic synthetic fibers in the middle layer region be lower than the degree of thermal melting of the organic synthetic fibers in the coated layer region and the non-coated layer region. By bringing the middle layer region of the non-woven fabric into a semi-molten state, while making the degree of thermal fusion of the organic synthetic fibers in the coated layer region and the non-coated layer region higher than that of the middle layer region, compactness of the surface is attained in any of the semipermeable membrane-coated surface or the non-coated surface.

In regard to the non-woven fabric for semipermeable membrane support according to the present invention, any one surface of the non-woven fabric may serve as semipermeable membrane-coated surface.

In regard to the non-woven fabric for semipermeable membrane support according to the present invention, it is preferable that the fibers incorporated into the non-woven fabric be organic synthetic fibers.

The non-woven fabric for semipermeable membrane support according to the present invention includes an embodiment in which the organic synthetic fibers include a main constituent fiber, and the main constituent fiber is one kind of polyester main constituent fiber.

### EFFECT OF THE INVENTION

According to the present invention, a non-woven fabric for semipermeable membrane support, in which adhesiveness of the semipermeable membrane to the support is satisfactory, the thickness uniformity of the semipermeable membrane is satisfactory, and permeation-through of a coating liquid does not occur, can be provided. Namely, by relatively decreasing the thermal fusion bonding properties of the organic synthetic fibers in the middle layer region of the non-woven fabric with respect to the thickness direction of the non-woven fabric, the anchor effect of the resin coating liquid is improved, and the adhesiveness to the support of the semipermeable membrane becomes fine. Since the thermal fusion bonding properties of the organic synthetic fibers in the coated layer region of the non-woven fabric are not low as in the middle layer region, the smoothness of the coated surface is maintained. Since the thermal fusion bonding properties of the organic synthetic fibers in the non-coated layer region on the opposite side of the coated layer region are not low as in the middle layer region, the permeation-through of the semipermeable membrane coating liquid can be prevented. Therefore, it has become possible to produce a non-woven fabric for semipermeable membrane support that has never been present before.

### DESCRIPTION OF EMBODIMENTS

Hereinafter, the present invention will be described in detail by way of exemplary embodiments, but the present invention is not intended to be construed to be limited by these descriptions. As long as the effect of the present invention is provided, the exemplary embodiments may include various modifications.

The non-woven fabric for semipermeable membrane support according to the present exemplary embodiment is a non-woven fabric containing organic synthetic fibers as a primary component, wherein, in the non-woven fabric for semipermeable membrane support, a semipermeable membrane is to be supported by one surface of the non-woven fabric, wherein the coated surface to be coated with the semipermeable membrane and the non-coated surface that is opposite to the coated surface of the non-woven fabric both have a Bekk smoothness of 5 seconds or more, and the non-woven fabric has an internal bond strength in the sheet transverse direction in the range from 0.4 to 0.8 N·m.

The organic synthetic fibers, which are primary constituent element of the non-woven fabric that serves as a semipermeable membrane support, can be divided into a main constituent fiber and a binder fiber.

Examples of the main constituent fiber include fibers spun from synthetic resins such as polyethylene, polypropylene, polyacrylate, polyester, polyurethane, polyvinyl chloride, polyvinylidene chloride, polyethylene fluoride, polyaramid, polyimide, polyacrylonitrile and nylon. Furthermore, regenerated celluloses such as rayon; cellulose derivatives such as cellulose acetate and nitrocellulose; pulp of synthetic resins such as polyethylene, polypropylene, acrylic and aramid; or fibers produced from natural products as the raw material sources, such as polylactic acid, polybutyric acid and polysuccinic acid, which are being actively studied in recent years for biochemical applications, are also included in the scope of the organic synthetic fibers. Among the synthetic fibers described above, polyester fibers are suitably used in view of heat resistance, chemical resistance, fiber diameter, the abundance of the kind of properties, or the like. Here, in the present invention, among the organic synthetic fibers, an organic synthetic fiber which is not intended for melt adhesion at a low temperature and has a conventional melting point, for example, a melting point of 140°C to 300°C, is referred to as "main constituent fiber." Depending on the shape of the main constituent fiber, when a fiber having a fine fiber diameter is used, the pore diameter of a completed sheet is further decreased, and when a fiber having a large fiber diameter is used, the strength of the sheet is increased. When a short fiber is used, dispersibility in water during a wet papermaking process is enhanced, and when a long fiber is used, the strength of the sheet is increased. In the present exemplary embodiment, a synthetic fiber having a fiber thickness of from 0.05 decitex to 5.0 decitex, and preferably from 0.1 decitex to 3.0 decitex, and having a length of from 1 mm to 8 mm, and preferably a length in the range from 3 mm to 6 mm, is suitably used. Furthermore, the cross-sectional shape of the fiber can be appropriately selected as necessary, and is not limited in the present exemplary embodiment.

A binder fiber is mixed with the main constituent fiber for the purpose of enhancing the strength properties of manufactured products, or maintaining a sufficient sheet strength between a sheet-forming process and a winding process. Here, the "binder fiber" refers to an organic synthetic fiber in which the melting point of the fiber as a whole or the fiber surface (sheath portion) is lower by about 20°C, or by 20°C or more, than the melting point of the main constituent fiber, and has an effect in which the fiber surface or the fiber as a whole undergoes melt adhesion as a result of heating by a drying process after papermaking or a thermal pressing process, and thereby physical strength is imparted to the sheet.

Regarding the binder fiber, there are available a type in which the entire constituent resin has a low melting point, and a type having a double structure having an inner side and an outer side, that is, a so-called core-sheath structure, in which only the surface is fused, and all of these can be used in the present exemplary embodiment. Suitably, an unstretched polyester fiber having a melting point of from about 200°C to 230°C is used. Furthermore, the fiber thickness, length, shape of the cross-section, and the like can be selected according to the purpose, similarly to the main constituent fiber. For example, according to the present exemplary embodiment, a binder fiber having a fiber thickness of from 0.1 decitex to 5.0 decitex, and preferably from 0.5 decitex to 3.0 decitex, and a length of from 1 mm to 8 mm, and preferably a length in the range from 3 mm to 6 mm, is suitably used. It is preferable that the binder resin have a resin composition which is the same as or close to the resin composition of the main constituent fiber; however, different kinds of resin compositions can also be used in accordance with the required characteristics. Furthermore, a vinylon binder fiber having a characteristic of melting under humid and hot conditions is also suitably used.

Exemplary embodiments of the present invention include a case in which only a main constituent fiber is incorporated as an organic synthetic fiber, and a case in which both a main constituent fiber and a binder fiber are incorporated. In the present exemplary embodiment, the ratio (mass ratio) of the main constituent fiber and the binder fiber is preferably in the range of from main constituent fiber:binder fiber = 100:0 to 50:50, more preferably in the range from 80:20 to 55:45. When a sheet containing only a synthetic fiber that serves as the main constituent fiber, without any binder fiber mixed therein, is subjected to hot press processing, strands of the main constituent fiber can be caused to melt-adhere with each other; however, since the main constituent fiber is not intended for melt adhesion at a low temperature, it is necessary to raise the heating temperature at the time of hot press processing to a temperature close to the melting point of the main constituent fiber. When a binder fiber is incorporated into the main constituent fiber, fiber strands can be caused to melt-adhere with each other at a temperature lower than the melting point of the main constituent fiber. However, if the ratio of the binder fiber is more than 50%, since the physical strength of the binder fiber itself is weaker than the physical strength of the main constituent fiber, the physical strength of the sheet (hereinafter, may be described simply as "strength") is decreased.

Among the fibers to be incorporated, the organic synthetic fibers are employed as the main constituent fiber of the non-woven fabric by adjusting the mixing ratio of the organic synthetic fibers to 50% by mass or more, and preferably 70% by mass or more. At this time, if necessary, pulp-like raw materials, for example, cellulose-based pulp such as wood pulp for papermaking or cotton linter; inorganic fibers such as glass fiber, silica fiber and alumina fiber; inorganic filler materials such as calcium carbonate, talc and kaolin; or the like can also be incorporated in addition to the organic synthetic fibers.

Regarding the non-woven fabric for semipermeable membrane support, for example, a wet laid non-woven fabric that is produced by a wet papermaking method is used.

According to the present invention, a wet laid non-woven fabric provides the effect of the present invention more effectively than a dry type non-woven fabric does. This is because, as compared with a dry type non-woven fabric in which organic synthetic fibers as continuous long fibers constitute a main constituent element, a wet laid non-woven fabric in which organic synthetic fibers as cut short fibers constitute a main constituent element, is likely to have high air permeability of the middle layer, and is likely to exhibit an anchor effect.

The non-woven fabric before being subjected to hot press processing is such that the effect of the present invention is exhibited by any of a single layer structure or a multilayer structure having two or more layers superimposed. A non-woven fabric having a multilayer structure before being subjected to hot press processing may be formed of the same raw material in all the layers, or may be formed from different raw materials, as long as the effect of the present invention is not impaired. Furthermore, even with the same raw material, the fiber diameter and the fiber length of the organic synthetic fibers can be changed. When hot press processing is carried out using a thermal calender, if the non-woven fabric has a single layer structure, the way of heat propagation is uniform, and accordingly, control of the pressure drops of the various layer regions based on the processing conditions can be easily implemented. On the other hand, if the non-woven fabric has a multilayer structure, heat propagation may be changed at the dislocation parts where layers are brought into contact, and the control of pressure drop may not be achieved effectively.

Regarding the method for producing a wet laid non-woven fabric, a so-called wet papermaking method in which organic synthetic fibers as raw materials are dispersed in water, subsequently the fibers are laminated on a papermaking wire, dehydrating the fibers through the lower part of the wire, and thereby forming a sheet, is used. Among others, a wet laid non-woven fabric according to a wet papermaking method is particularly preferred because the network of constituent fibers is likely to be formed more uniformly than a dry type non-woven fabric. The kind of the papermaking machine used in the wet papermaking method is not limited in the present exemplary embodiment, and for example, a single-sheet papermaking apparatus, or in the case of a continuous papermaking machine, a Fourdrinier papermaking machine, a short wire papermaking machine, a cylindrical wire papermaking machine, an inclined wire papermaking machine, a gap former, and a delta former can be used.

Since a sheet obtained after papermaking contains a large amount of water, the sheet is dried in a drying process. The drying method used at this time is not particularly limited, but hot air drying, infrared drying, drum drying, drying by a Yankee dryer and the like are suitably used. The drying temperature is desirably 100°C to 160°C, and more desirably 105°C to 140°C.

A wet laid non-woven fabric or a dry type non-woven fabric produced by the methods described above may be used directly as a semipermeable membrane support, but in many cases, the strength as a semipermeable membrane support is insufficient. Thus, in order to obtain a strength sufficient for a semipermeable membrane support, fibers are thermally welded by subjecting the fibers to hot press processing at a temperature near the melting point of the main constituent fiber, or a temperature near the melting point of the binder fiber, and thereby strength is increased. This treatment is carried out using various hot press processing apparatuses, but generally, a thermal calender apparatus is effective. For example, a method of using a metal roll nip calender that is capable of processing at a temperature of 160°C or higher can be used, or if a resin roll having high heat resistance is available, a metal roll/resin roll soft nip calender can also be used.

The temperature conditions for the hot press processing is generally preferably in the range from 160°C to 260°C, and more preferably in the range from 180°C to 240°C; however, depending on the kind of the synthetic fibers used, a lower temperature or a higher temperature may be desirable. For example, when a binder fiber is incorporated into a main constituent fiber, the fibers are thermally welded by subjecting the fibers to hot press processing at a temperature near the melting point of the binder fiber, and thereby strength is increased. The linear pressure is preferably in the range from 50 kN/m to 250 kN/m, and more preferably in the range from 100 kN/m to 200 kN/m, but is not particularly limited. Furthermore, in order for the non-woven fabric to exhibit uniform performance over the entire web, it is desirable to treat the non-woven fabric with a temperature profile or linear pressure profile that is as uniform as possible. The roll diameter of the thermal calender apparatus is appropriately selected depending on parameters such as the base material to be subjected to hot press processing, the nip pressure, and the speed. When using only a main constituent fiber without incorporating a binder fiber, the non-woven fabric is subjected to hot press processing at a temperature near the melting point of the main constituent fiber.

The method for obtaining the non-woven fabric for semipermeable membrane support of the present exemplary embodiment is not intended to be limited to the following method, but one example may be a method of utilizing the relationship between the fusion temperature and the line speed during the process of thermal fusion of organic synthetic fibers in the production of a support (non-woven fabric). If the line speed is relatively slow, heat is conducted to the interior in the thickness direction of the non-woven fabric, and the coated layer region, the side on which the semipermeable membrane is to be disposed, the middle layer region and the non-coated layer region, the side opposite to the surface on which the semipermeable membrane is to be disposed, are thermally fused uniformly. If the line has a speed exceeding a certain constant speed, heat cannot be easily conducted to the interior of the non-woven fabric, thermal fusion in the middle layer region does not proceed, and the middle layer region is brought to a semi-molten state. However, if the line speed is further increased, thermal fusion in the middle layer region does not proceed further, and the middle layer region is almost in an unfused state. As a result, the coating liquid penetrates excessively into the non-woven fabric and deteriorates the formation of a semipermeable membrane, and there rises a problem that the non-woven fabric itself is detached in the middle layer region. In regard to the semi-molten state of the middle layer region, strict process management should be carried out so that a semi-molten state satisfying the relationships of the Bekk smoothnesses of the semipermeable membrane-coated surface and non-coated surface and the internal bond strength in the sheet transverse direction, which will be described below, would be achieved. Examples of the thermal fusion process include the drying process of the papermaking process described previously, and hot press processing, and particularly, the general conditions of the hot press pressing are important because the conditions are largely affected.

The present invention makes the thermal fusion bonding state of the fibers in the middle layer region of the non-woven fabric slack with respect to the coated layer region and non-coated layer region by utilizing the above-mentioned method and the like. Specifically, by adjusting the degree of thermal melting of the organic synthetic fibers in the middle layer region to be lower than the degrees of thermal melting of the organic synthetic fibers in the coated layer region and non-coated layer region, the compactness of the middle layer region is lowered, and thus the internal bond strength in the sheet transverse direction, which acts as an index of the thermal fusion bonding properties of the organic synthetic fibers that constitute the non-woven fabric, can be set to be in the range from 0.4 to 0.8 N·m. Furthermore, since it is necessary to maintain the compactness of the coated layer region and non-coated layer region, the Bekk smoothness should be at least 5 seconds or more. The Bekk smoothness can be indices of the thermal fusion bonding properties of the organic synthetic fibers on the respective surfaces of the coated layer region and the non-coated layer region, i.e., the semipermeable membrane-coated surface and the non-coated surface.

The internal bond strength herein is a numerical value measured by an internal bond tester for evaluating the internal bond strengths of paper and board paper based on JAPAN TAPPI method for testing paper and pulp No. 18-2: 2000 "Paper and board paper - Method for testing internal bond strength, Part 2: Internal Bond Tester Method." The numerical value is obtained by a test method in which a test piece with adhesive tapes attached to the both surfaces thereon is attached to a sample attaching plate, and then an impact is provided onto the L-shaped bracket attached to the test piece by a hammer, and the load at the time when the test piece peels off together with the L-shaped bracket is measured. The unit is N·m. Since the internal bond strength is obtained by measuring the strength of peeling from the part where the strength is weak in the non-woven fabric layer, it can be an index for showing whether the thermal fusion bonding state of the fibers in the middle layer region of the non-woven fabric is high or low. The reason why the internal bond strength is in the sheet transverse direction is that the fiber alignment of a non-woven fabric generally easily becomes the longitudinal direction, and thus the internal bond strength in the sheet transverse direction tends to be lower than that in the sheet longitudinal direction, and the difference in the thermal fusion bonding states of the fibers easily appears.

In the present invention, the internal bond strength in the sheet transverse direction is preferably in the range from 0.4 to 0.8 N·m, more preferably in the range from 0.5 to 0.75 N·m. When the internal bond strength is greater than 0.8 N·m, the thermal melting properties of the fibers in the middle layer region of the non-woven fabric increase and the middle layer region becomes dense, and thus the semipermeable membrane coating liquid becomes difficult to permeate into the middle layer region and the anchor effect of the present invention does not appear. When the internal bond strength is less than 0.4 N·m, the thermal melting properties of the fibers in the middle layer region of the non-woven fabric become low and the middle layer region becomes rough, and thus the semipermeable membrane coating liquid extremely permeates the middle layer region, and the surface properties (thickness uniformity) of the semipermeable membrane are deteriorated, and resin permeation-through arises.

Furthermore, the Bekk smoothness is a test method according to JIS P 8119: 1998, "Paper and Board Paper - Method for Testing Smoothness by Bekk Smoothness Tester," and can be measured by using a Bekk smoothness tester. In the present invention, the Bekk smoothnesses of the semipermeable membrane-coated surface and the non-coated surface are preferably 5 seconds or more, further preferably 10 seconds or more. When the Bekk smoothnesses are lower than 5 seconds, the thermal fusion bonding properties of the organic synthetic fibers in the semipermeable membrane-coated surface and non-coated surface are deteriorated, and the compactness of the surfaces is lowered. Accordingly, when the smoothness of the semipermeable membrane-coated surface is lower than 5 seconds, the fiber melting state of the semipermeable membrane-coated surface is poor, and the fluff of the fibers penetrates the semipermeable membrane, and thus the surface properties of the semipermeable membrane are deteriorated. Furthermore, when the smoothness of the non-coated surface is lower than 5 seconds, the semipermeable membrane coating liquid that has penetrated into the middle layer region excessively penetrates into the non-coated layer region, and thus resin permeation-through arises, and the surface properties (thickness uniformity) of the semipermeable membrane are deteriorated. Any one of the surfaces of the non-woven fabric may serve as a semipermeable membrane-coated surface. In the process of coating a semipermeable membrane, management of the front and the back of the non-woven fabric is made easier. The coated layer region is a region on the side where a surface that is arbitrary selected from the both surfaces of the non-woven fabric is coated with the semipermeable membrane, and the non-coated layer region is a region opposite to the coated layer region. The surface on which the semipermeable membrane is to be coated is one surface of the non-woven fabric.

Furthermore, when the Bekk smoothness of the semipermeable membrane-coated surface is high, the semipermeable membrane coating liquid can be coated more homogeneously, and the unevenness of the thickness of the semipermeable membrane is decreased and thus the surface properties of the semipermeable membrane are improved. However, when the Bekk smoothness is too high, the clinging of the semipermeable membrane to the surface of the non-woven fabric is deteriorated, and an anchor effect is difficult to appear, and consequently, the semipermeable membrane easily peels from the non-woven fabric. At a lower Bekk smoothness, the clinging of the semipermeable membrane to the surface of the non-woven fabric becomes finer and an anchor effect is exerted more easily. Namely, the relationship between the Bekk smoothness of the semipermeable membrane-coated surface and the peeling strength is in a conflicting relationship.

However, since the middle layer region is in a semi-molten state in the non-woven fabric of the present invention, even if the Bekk smoothness of the semipermeable membrane-coated surface becomes relatively high, the coating liquid permeates into the middle layer region; therefore, an anchor effect is exerted, and thus the semipermeable membrane and non-woven fabric become difficult to be peeled, and the surface properties of the semipermeable membrane are also improved at the same time. However, if the internal bond strength of the non-woven fabric in the sheet transverse direction is too high, the semipermeable membrane coating liquid is difficult to permeate into the middle layer region in the case when the Bekk smoothness is high, and thus an anchor effect is difficult to appear, and the semipermeable membrane easily peels from the non-woven fabric. Conversely, if the internal bond strength of the non-woven fabric in the sheet transverse direction is too low, whereas if the Bekk smoothness is high, the semipermeable membrane coating liquid excessively permeates into the middle layer region, and thus the surface properties of the semipermeable membrane are deteriorated. The upper limit of the Bekk smoothness is not limited, but it is preferably 50 seconds or less, further preferably 40 seconds or less.

In order to improve the coating adequacy of the semipermeable membrane coating liquid onto the non-woven fabric, it is also necessary to control the aeration properties of the non-woven fabric after the hot press processing treatment. In the present invention, the aeration properties are represented by a pressure drop. The unit is Pa. The pressure drop is preferably from 50 Pa to 3000 Pa, and more preferably from 80 Pa to 1500 Pa, as the pressure drop obtainable when the face velocity of the wet laid non-woven fabric is 5.3 cm/second. If the pressure drop is less than 50 Pa, the semipermeable membrane coating liquid penetrates excessively to the non-woven fabric, and the surface of the semipermeable membrane becomes non-uniform, or permeation-through arises. Furthermore, if the pressure drop is larger than 3000 Pa, to the contrary, since the semipermeable membrane coating liquid becomes difficult to penetrate into the sheet interior of the wet laid non-woven fabric, the clinging of the semipermeable membrane to the wet laid non-woven fabric surface is deteriorated, and the anchor effect of the present invention is not exhibited.

In order to make the coating suitability of the semipermeable membrane coating liquid to the non-woven fabric more satisfactory, it is also necessary to increase the sheet density of the non-woven fabric that serves as a base material. The sheet density is preferably 0.5 g/cm³ or more, more preferably 0.6 g/cm³ or more, and most preferably 0.7 g/cm³ or more. If the sheet density is less than 0.5 g/cm³, the semipermeable membrane coating liquid penetrates excessively to the non-woven fabric, and the surface of the semipermeable membrane becomes non-uniform, or permeation-through arises. The upper limit of the sheet density is, for example, 1.0 g/cm³.

The grammage of the non-woven fabric is preferably from 30 g/m² to 200 g/m², and more preferably from 50 g/m² to 150 g/m². If the grammage of the non-woven fabric is larger than 200 g/m², when the semipermeable membrane thus produced is formed into a module, the module may become excessively thick so that the area per module is decreased, and the filtration performance may decrease; if the grammage is less than 30 g/m², the thickness is excessively small so that there is a risk of the occurrence of permeation-through of the semipermeable membrane coating liquid in the film-forming process. Furthermore, the thickness of the non-woven fabric is preferably from 30 µm to 400 µm, and more preferably from 55 µm to 300 µm. If the thickness of the non-woven fabric is more than 400 µm, when the semipermeable membrane thus produced is formed into a module, the module may become excessively thick so that the area per module is decreased, and the filtration performance may decrease; if the thickness is less than 30 µm, the thickness is excessively small so that there is a risk of the occurrence of permeation-through of the semipermeable membrane coating liquid in the film-forming process.

### EXAMPLES

Next, the present invention will be described more specifically by way of Examples, but the present invention is not intended to be limited to these Examples.

### (Example 1)

### <Preparation of fiber raw material slurry>

22 kg of a commercially available polyester main constituent fiber (trade name: EP133, manufactured by Kuraray Co., Ltd.) having a fiber thickness of 1.45 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and were dispersed for 5 minutes using a dispersing machine, to obtain a fiber raw material slurry having a fiber content concentration of 1% by mass.

### <Preparation of fiber slurry>

Water was added to the fiber raw material slurry 1 to dilute the whole system, and thus a fiber slurry having a fiber content concentration of 0.03% by mass was obtained.

### <Production of sheet>

This fiber slurry was introduced into a head box of a short wire papermaking machine to process the fiber slurry for papermaking, and then the fiber slurry was dried with a cylinder dryer having a surface temperature of 120°C until the sheet completely dried, to obtain a continuous rolled base paper.

### <Hot press processing>

The rolled base paper was subjected to hot press processing under the conditions of a roll surface temperature of 185°C, a clearance between rolls of 70 µm, a linear pressure of 100 kN/m, and a line speed of 20 m/min, using a thermal calender apparatus with a hard nip of metal roll/metal roll, having a surface length of the metal rolls of 1170 mm and a roll diameter of 450 mm, and thus a non-woven fabric for semipermeable membrane support was obtained.

### (Example 2)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 17 m/min, and thus a non-woven fabric for semipermeable membrane support was obtained.

### (Example 3)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the roll surface temperature used in Example 1 was changed to 190°C and the line speed was changed to 12 m/min, and thus a non-woven fabric for semipermeable membrane support was obtained.

### (Example 4)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the roll surface temperature used in Example 1 was changed to 177°C, and the line speed was changed to 20 m/min, and thus a non-woven fabric for semipermeable membrane support was obtained.

### (Example 5)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the clearance between the rolls used in Example 1 was changed to 60 µm, and the line pressure was changed to 150 kN/m, and thus a non-woven fabric for semipermeable membrane support was obtained.

### (Example 6)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the clearance between the rolls used in Example 1 was changed to 60 µm, the line pressure was changed to 150 kN/m, and the line speed was changed to 17 m/min, and thus a non-woven fabric for semipermeable membrane support was obtained.

### (Example 7)

### <Preparation of fiber raw material slurry>

15 kg of a commercially available polyester main constituent fiber (trade name: EP133, manufactured by Kuraray Co., Ltd.) having a fiber thickness of 1.45 decitex and a cut length of 5 mm, 7 kg of a commercially available polyester main constituent fiber (trade name: TM04PN, manufactured by TEIJIN LIMITED) having a fiber thickness of 0.1 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and were dispersed for 5 minutes using a dispersing machine, to obtain a fiber raw material slurry having a fiber content concentration of 1% by mass.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 18 m/min, and thus a non-woven fabric for semipermeable membrane support was obtained.

### (Example 8)

### <Preparation of fiber raw material slurry>

15 kg of a commercially available polyester main constituent fiber (trade name: EP133, manufactured by Kuraray Co., Ltd.) having a fiber thickness of 1.45 decitex and a cut length of 5 mm, 7 kg of a commercially available polyester main constituent fiber (trade name: EP303, manufactured by Kuraray Co., Ltd.) having a fiber thickness of 3.1 decitex and a cut length of 5 mm, and 8 kg of a commercially available polyester binder fiber (trade name: TR07N, manufactured by Teijin Fibers, Ltd.) having a fiber thickness of 1.2 decitex and a cut length of 5 mm were introduced into water and were dispersed for 5 minutes using a dispersing machine, to obtain a fiber raw material slurry having a fiber content concentration of 1% by mass.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 18 m/min, and thus a non-woven fabric for semipermeable membrane support was obtained.

### (Comparative Example 1)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the roll surface temperature used in Example 1 was changed to 190°C, and the line speed used in Example 1 was changed to 5 m/min, and thus a non-woven fabric for semipermeable membrane support was obtained.

### (Comparative Example 2)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 30 m/min, and thus a non-woven fabric for semipermeable membrane support was obtained.

### (Comparative Example 3)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 10 m/min, and thus a non-woven fabric for semipermeable membrane support was obtained.

### (Comparative Example 4)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the clearance between the rolls used in Example 1 was changed to 60 µm, the line pressure was changed to 150 kN/m, and the line speed was changed to 10 m/min, and thus a non-woven fabric for semipermeable membrane support was obtained.

### (Comparative Example 5)

### <Preparation of fiber raw material slurry>

The process was carried out in the same manner as in Example 1.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the clearance between the rolls used in Example 1 was changed to 60 µm, the line pressure was changed to 150 kN/m, and the line speed was changed to 30 m/min, and thus a non-woven fabric for semipermeable membrane support was obtained.

### (Comparative Example 6)

### <Preparation of fiber raw material slurry>

The process was carried out in the same manner as in Example 7.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 10 m/min, and thus a non-woven fabric for semipermeable membrane support was obtained.

### (Comparative Example 7)

### <Preparation of fiber raw material slurry>

The process was carried out in the same manner as in Example 7.

### <Preparation of fiber slurry>

The process was carried out in the same manner as in Example 1.

### <Production of sheet>

The process was carried out in the same manner as in Example 1.

### <Hot press processing>

The process was carried out in the same manner as in Example 1, except that the line speed used in Example 1 was changed to 30 m/min, and thus a non-woven fabric for semipermeable membrane support was obtained.

The non-woven fabrics for semipermeable membrane support obtained in the Examples were evaluated by the following methods.

### <Measurement of grammage>

The measurement was carried out according to JIS P 8124: 1998 "Paper and Board Paper - Determination of Grammage." The unit was g/m².

### <Measurement of thickness and density>

The measurement was carried out according to JIS P 8118: 1998 "Paper and Board Paper - Method for Testing Thickness and Density." The unit was µm.

### <Measurement of pressure drop>

The pressure drop obtainable when air was blown to a filtering medium having an effective area of 100 cm² at a face velocity of 5.3 cm/sec by using a self-made apparatus was measured by using a Manostar Gauge manufactured by Yamamoto Electric Works Co., Ltd. The unit was Pa.

### <Measurement of internal bond strength in sheet transverse direction>

Using an internal bond tester manufactured by Kumagai Riki Kogyo Co., Ltd., the internal bond strength in the sheet transverse direction was measured according to JAPAN TAPPI, Methods for testing Paper and Pulp No. 18-2: 2000 "Paper and Board Paper - Method for Testing Internal Bond Strength - Part 2: Internal Bond Tester Method." The size of the sample was 25.4 × 25.4 mm, and an average value of five points was obtained. The unit was N·m.

### <Measurement of Bekk smoothness>

Using a Bekk smoothness tester manufactured by Kumagai Riki Kogyo Co., Ltd., the Bekk smoothnesses of the semipermeable membrane-coated surface and non-coated surface of the sample were measured according to JIS P 8119: 1998 "Paper and Board Paper - Method for Testing Smoothness by Bekk Smoothness Tester."

### <Formation of semipermeable membrane>

A sample with an A4 size was cut from each of the non-woven fabrics for semipermeable membrane support obtained in the Examples, the semipermeable membrane support was coated with a 20% by mass DMF (dimethylformamide) solution of a polysulfone resin using a Mayer Bar #12, and the sample was then immersed in water to solidify the coated membrane, and thus a semipermeable membrane was formed. The film thickness of the semipermeable membrane was adjusted to 50 µm after drying.

### <Peeling strength of semipermeable membrane>

The above-described samples of the non-woven fabrics for support each having a semipermeable membrane formed thereon were each passed through the hands 10 times by rubbing with the hands, and then the peeled state of the semipermeable membrane was evaluated by visual inspection. A sample in which the semipermeable membrane was completely peeled from the support was rated as × (having a problem for practical use); a sample in which signs of peeling of a portion were seen was rated as Δ (level below the lower limit of practical usability); and a sample in which the semipermeable membrane was not peeled was rated as ○ (no problem for practical use). Samples rated as ○ and Δ were regarded as acceptable, and samples rated as × were regarded as unacceptable.

<Surface properties of semipermeable membrane (uniformity of thickness)>

For each of the above-described samples of the non-woven fabrics for support each having a semipermeable membrane formed thereon, the surface state of the semipermeable membrane was evaluated by visual inspection. A sample in which unevenness was observed on the surface of the semipermeable membrane was rated as × (having a problem for practical use); a sample in which slight unevenness was observed was rated as Δ (level below the lower limit of practical usability); and a sample in which no unevenness was observed was rated as ○ (no problem for practical use). Samples rated as ○ and Δ were regarded as acceptable, and samples rated as × were regarded as unacceptable.

### <Resin permeation-through>

For each of the above-described samples of the non-woven fabrics for support each having a semipermeable membrane formed thereon, the state of permeation-through of the semipermeable membrane coating liquid in the non-coated surface was evaluated by visual inspection. A sample in which permeation-through was seen at the non-coated surface was rated as × (having a problem for practical use); a sample in which signs of permeation-through were seen was rated as Δ (level below the lower limit of practical usability); and a sample without any permeation-through was rated as ○ (no problem for practical use). Samples rated as ○ and Δ were regarded as acceptable, and samples rated as × were regarded as unacceptable.

**[Table 1]**

| | | Example 1 | Example 2 | Example 3 | Example 4 | Example 5 | Example 6 | Example 7 | Example 8 |
|---|---|---|---|---|---|---|---|---|---|
| Fiber blend | | PET main constituent 1.45dtex,5m m 22kg/ PET binder 1.2dtex,5mm 8kg | PET main constituent 1.45dtex,5m m 22kg/ PET binder 1.2dtex,5mm 8kg | PET main constituent 1.45dtex,5m m 22kg/ PET binder 1.2dtex,5mm 8kg | PET main constituent 1.45dtex,5m m 22kg/ PET binder 1.2dtex,5mm 8kg | PET main constituent 1.45dtex,5m m 22kg/ PET binder 1.2dtex,5mm 8kg | PET main constituent 1.45dtex.5m m 22kg/ PET binder 1.2dtex,5mm 8kg | PET main constituent 1.45dtex,5m m 15kg/ PET main constituent 0.1 dtex,5mm 3.1 dtex,5mm 7kg/ PET binder 1.2dtex,5mm 8kg | PET main constituent 1.45dtex,5m m 15kg/ PET main constituent 3.1dtex,5mm 7kg/ PET binder 1.2dtex,5mm 8kg |
| Hot press processing | Roll | Metal/metal | Metal/metal | Metal/metal | Metal/metal | Metal/metal | Metal/metal | Metal/metal | Metal/metal |
| | Temperature ° C | 185 | 185 | 185 | 177 | 185 | 185 | 185 | 185 |
| | Clearance *µ*m | 70 | 70 | 70 | 70 | 60 | 60 | 70 | 70 |
| | Linear pressure KN/m | 100 | 100 | 100 | 100 | 150 | 150 | 100 | 100 |
| | Line speed m/min | 20 | 17 | 12 | 20 | 20 | 17 | 18 | 18 |
| Grammage | g/m² | 80 | 77 | 78 | 77 | 78 | 78 | 80 | 79 |
| Thickness | *µ*m | 97 | 97 | 99 | 100 | 89 | 90 | 98 | 99 |
| Density | g/cm³ | 0.825 | 0.794 | 0.788 | 0.770 | 0.876 | 0.867 | 0.816 | 0.798 |
| Pressure drop | Pa | 430 | 390 | 450 | 450 | 690 | 740 | 520 | 230 |
| Internal bond strength in sheet transverse direction | N·m | 0.5 | 0.67 | 0.78 | 0.41 | 0.53 | 0.70 | 0.63 | 0.57 |
| Bekk smoothness Coated surface | S | 18.0 | 13.9 | 25.9 | 6.1 | 37.3 | 40.5 | 22.8 | 14.8 |
| Same Non-coated surface | S | 19.1 | 13.7 | 23.8 | 6.7 | 38.4 | 40.3 | 21.5 | 15.3 |
| Peeling strength of semipermeable membrane | | ○ | ○ | ○ | ○ | ○ | ○ | ○ | ○ |
| Surface properties of semipermeable membrane | | ○ | ○ | ○ | Δ | ○ | ○ | ○ | ○ |
| Resin permeation-through | | ○ | ○ | ○ | ○ | ○ | ○ | ○ | ○ |

**[Table 2]**

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Fiber blend | | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 22kg/ PET binder 1.2dtex,5mm | PET main constituent 1.45dtex,5mm 22kg/ PET binder 1.2dtex,5mm 8kg | PET main constituent 1.45dtex,5mm 22kg/ PET binder 1.2dtex,5mm 8kg | PET main constituent 1.45dtex,5mm 15kg/ PET main constituent O.1dtex.5mm 7kg/ PET binder 1.2dtex,5mm 8kg | PET main constituent 1.45dtex,5mm 15kg/ PET main constituent 0.1 dtex,5mm 7kg/ PET binder 1.2dtex,5mm 8kg |
| Hot press processing | Roll | Metal/metal | Metal/metal | Metal/metal | Metal/metal | Metal/metal | Metal/metal | Metal/metal |
| | Temperature ° C | 190 | 185 | 185 | 185 | 185 | 185 | 185 |
| | Clearance *µ*m | 70 | 70 | 70 | 60 | 60 | 70 | 70 |
| | Linear pressure kN/m | 100 | 100 | 100 | 150 | 150 | 100 | 100 |
| | Line speed m/min | 5 | 30 | 10 | 10 | 30 | 10 | 30 |
| Grammage | g/m² | 77 | 76 | 78 | 80 | 78 | 79 | 78 |
| Thickness | *µ*m | 99 | 98 | 100 | 90 | 89 | 98 | 98 |
| Density | g/cm³ | 0.778 | 0.776 | 0.780 | 0.889 | 0.876 | 0.806 | 0.796 |
| Pressure drop | Pa | 420 | 370 | 460 | 830 | 410 | 690 | 370 |
| Internal bond strength in sheet transverse direction | N·m | 0.94 | 0.32 | 0.83 | 0.82 | 0.33 | 0.89 | 0.35 |
| Bekk smoothness Coated surface Same Non-coated surface | S | 41.6 | 3.5 | 33.7 | 51.9 | 16.7 | 38.4 | 17.5 |
| | S | 39.7 | 3.7 | 34.1 | 52.6 | 16.5 | 38.1 | 16.6 |
| Peeling strength of semipermeable membrane | | × | ○ | × | × | ○ | × | ○ |
| Surface properties of semipermeable membrane | | ○ | × | ○ | ○ | ○ | ○ | × |
| Resin permeation-through | | ○ | × | ○ | ○ | × | ○ | × |

The results are summarized in Table 1 and Table 2. From the results of Table 1 and Table 2, it can be seen that in Example 1 and Example 2 in which the internal bond strength in the sheet transverse direction was within the defined range, the peeling strength of the semipermeable membrane, the surface properties of the semipermeable membrane and the resin permeation-through were at acceptable levels, and an appropriate degree of the semi-molten state of the middle layer region was obtained. Furthermore, Example 3 exhibited a difference in the roll surface temperature of the thermal calender, from Examples 1 and 2; however, it can be seen that when the line speed is appropriately selected, an appropriate degree of the semi-molten state of the middle layer region is obtained, and the sample was at an acceptable level. In Example 4, the internal bond strength in the sheet transverse direction was close to the lower limit of the defined range, and the melting properties of the middle layer were low and at an acceptable level, whereas the surface properties of the semipermeable membrane were at a level below the lower limit of practical usability.

On the other hand, Comparative Example 1 and Comparative Example 3 are examples in which the internal bond strength in the sheet transverse direction was higher than the upper limit, and the peeling strength of the semipermeable membrane was deteriorated. It is understood that the anchor effect of the semipermeable membrane to the support was weakened. Comparative Example 2 is an example in which the internal bond strength in the sheet transverse direction and the Bekk smoothness were lower than the lower limit, and the surface properties of the coated layer and the resin permeation-through were deteriorated. It is understood that the semipermeable membrane coating liquid had penetrated excessively.

Examples 5 and 6 are examples in which the linear pressure was increased by narrowing the clearance between hot rolls. As the sheet density increased, the coated surface and the non-coated surface both had increased smoothness, and there was a concern about the anchor effect of the semipermeable membrane to the support being weakened; however, since the internal bond strength in the sheet transverse direction was in the defined range, the peeling strength of the semipermeable membrane was fine. In contrast, in Comparative Example 4, the internal bond strength in the sheet transverse direction was higher than the upper limit, and the peeling strength of the semipermeable membrane was deteriorated. In Comparative Example 5, the internal bond strength in the sheet transverse direction was lower than the lower limit, and the resin permeation-through was deteriorated.

Example 7 is an example in which the pressure drop was controlled by incorporating a PET main constituent fiber having a fine diameter to the fiber blend, and Example 8 is an example in which the pressure drop was controlled by mixing and incorporating a PET main constituent fiber having a large diameter. In both examples, the internal bond strength in the sheet transverse direction was within the defined range, and thus the peeling strength of the semipermeable membrane, the surface properties of the semipermeable membrane, and the resin permeation-through were at acceptable levels. In contrast, in Comparative Example 6, the internal bond strength in the sheet transverse direction was higher than the upper limit, and the peeling strength of the semipermeable membrane was deteriorated. In Comparative Example 7, the internal bond strength in the sheet transverse direction was lower than the lower limit, and the resin permeation-through and the surface properties of the semipermeable membrane were deteriorated.

## Claims

1. A non-woven fabric for semipermeable membrane support comprising organic synthetic fibers as a primary component, wherein a semipermeable membrane is to be supported by one surface of the non-woven fabric, **characterized in that**
the organic synthetic fiber consists of a polyester fiber having a length of 1 to 8 mm,
the non-woven fabric is a wet laid non-woven fabric subjected to hot press processing, having a density of 0.5 to 1.0 g/cm³, a grammage of 30 to 200 g/m², and a thickness of 30 to 400 µm,
a coated surface to be coated with the semipermeable membrane and a non-coated surface that is opposite to the coated surface of the non-woven fabric both have a Bekk smoothness of 5 seconds or more wherein the Bekk smoothness is based on JIS P 8119: 1998, "Paper and Board Paper - Method for Testing Smoothness by Bekk Smoothness Tester", and the non-woven fabric has an internal bond strength in a sheet transverse direction in a range from 0.4 to 0.8 N·m wherein the internal bond strength is based on JAPAN TAPPI method for testing paper and pulp No. 18-2: 2000 "Paper and board paper - Method for testing internal bond strength, Part 2: Internal Bond Tester Method",
any surface of the non-woven fabric may be coated with the semipermeable membrane,
fibers incorporated in the non-woven fabric are only organic synthetic fibers, and
the organic synthetic fibers contain a main constituent fiber and a binder fiber, and a mixing ratio of the main constituent fiber to the sum of the main constituent fiber and the binder fiber {main constituent fiber/(main constituent fiber + binder fiber)} is 50% by mass or more and lower than 100% by mass.

2. The non-woven fabric for semipermeable membrane support according to claim 1, wherein the non-woven fabric before being subjected to hot press processing has a single layer structure.

3. The non-woven fabric for semipermeable membrane support according to any one of claims 1 to 2 wherein when the non-woven fabric to be coated with the semipermeable membrane is divided, in a thickness direction, into a coated layer region on a side on which the semipermeable membrane is to be disposed, a middle layer region, and a non-coated layer region on a side opposite to the side on which the semipermeable membrane is to be disposed, a degree of thermal melting of the organic synthetic fibers in the middle layer region is lower than a degree of thermal melting of the organic synthetic fibers in the coated layer region and the non-coated layer region.

4. The non-woven fabric for semipermeable membrane support according to any one of claims 1 to 3, wherein the organic synthetic fibers include a main constituent fiber, and the main constituent fiber is one kind of polyester main constituent fiber.

## Patentansprüche

1. Vliesstoff für einen Träger für eine semipermeable Membran, der organischen Synthesefasern als einen Hauptbestandteil aufweist, wobei eine semipermeable Membran durch eine Oberfläche des Vliesstoffs gehalten werden soll,
**dadurch gekennzeichnet, dass**
die organischen Synthesefasern aus Polyesterfasern mit einer Länge von 1 bis 8 mm bestehen,
der Vliesstoff ein im Nassvliesverfahren hergestellter Vliesstoff ist, der einer Heißpressbearbeitung unterzogen wird und eine Dichte von 0,5 bis 1,0 g/cm³, ein Flächengewicht von 30 bis 200 g/mm² und eine Dicke von 30 bis 400 µm aufweist,
wobei eine mit der semipermeablen Membran beschichtete Oberfläche und eine der beschichteten Oberfläche des Vliesstoffs gegenüberliegende unbeschichtete Oberfläche beide eine Bekk-Glätte von 5 Sekunden oder mehr aufweisen, wobei die Bekk-Glätte auf JIS P 8119: 1998, "Paper and Board Paper - Method for Testing Smoothness by Bekk Smoothness Tester" basiert, und wobei der Vliesstoff eine innere Bindungsfestigkeit in einer Lagenquerrichtung in einem Bereich von 0,4 bis 0,8 N.m aufweist, wobei die innere Bindungsfestigkeit auf dem JAPAN-TAPPI-Verfahren zum Prüfen von Papier und Pulpe Nr. 18-2: 2000 "Paper and board paper - Method for testing internal bond strength, Teil 2: Internal Bond Tester Method" basiert,
jede Oberfläche des Vliesstoffs mit einer semipermeablen Membran beschichtet sein kann,
im Vliesstoff enthaltene Fasern ausschließlich organische Synthesefasern sind, und
die organischen Synthesefasern Hauptbestandteilfasern und Bindefasern enthalten, wobei ein Mischverhältnis zwischen den Hauptbestandteilfasern und der Summe aus den Hauptbestandteilfasern und den Bindefasern {Hauptbestandteilfasern/(Hauptbestandteilfasern + Bindefasern)} 50 Masse-% oder mehr und weniger als 100 Masse-% beträgt.

2. Vliesstoff nach Anspruch 1, wobei der Vliesstoff eine einschichtige Struktur hat bevor er der Heißpressbearbeitung unterzogen wird.

3. Vliesstoff nach Anspruch 1 oder 2, wobei, wenn der mit der semipermeablen Membran zu beschichtende Vliesstoff in einer Dickenrichtung in einen beschichteten Schichtbereich auf einer Seite, auf der die semipermeable Membran angeordnet werden soll, einen mittleren Schichtbereich und einen unbeschichteten Schichtbereich auf einer Seite, die der Seite gegenüberliegt, auf der die semipermeable Membran angeordnet werden soll, geteilt wird, ein thermischer Verschmelzungsgrad der organischen Fasern im mittleren Schichtbereich kleiner ist als ein thermischer Verschmelzungsgrad der organischen Synthesefasern im beschichteten Schichtbereich und im unbeschichteten Schichtbereich.

4. Vliesstoff nach einem der Ansprüche 1 bis 3, wobei die organischen Synthesefasern Hauptbestandteilfasern des Polyestertyps aufweisen.

## Revendications

1. Tissu non tissé pour support de membrane semi-perméable comprenant des fibres synthétiques organiques en tant que composant primaire, où une membrane semi-perméable est portée par une surface du tissu non tissé, **caractérisé en ce que**
la fibre synthétique organique consiste en une fibre de polyester ayant une longueur de 1 à 8 mm,
le tissu non tissé est un tissu non tissé par voie humide soumis à un traitement de pressage à chaud, ayant une densité de 0,5 à 1,0 g/cm³, un grammage de 30 à 200 g/cm³, et une épaisseur de 30 à 400 µm,
une surface revêtue devant être revêtue avec la membrane semi-perméable et une surface non revêtue qui est opposée à la surface revêtue du tissu non tissé ont toutes deux un lissé Bekk de 5 secondes ou plus, où le lissé Bekk est basé sur la méthode JIS P 8119 : 1998, « Paper and Board Paper - Method for Testing Smoothness by Bekk Smoothness Tester (Papier et carton - Méthode de test de lissé par le dispositif de test de lissé de Bekk) », et le tissu non tissé a une résistance de liaison interne dans une direction transverse de feuille dans une plage de 0,4 à 0,8 N · m, où la résistance de liaison interne est basée sur la méthode JAPAN TAPPI pour le test du papier et de la pulpe N° 18-2 : 2000 « Paper and board paper - Method for testing internal bond strenght, Part 2 : Internal Bond tester Method (Papier et carton - Méthode de test de la résistance de liaison interne, Partie2 : Méthode au dispositif de test de liaison interne) »,
une surface quelconque du tissu non tissé peut être revêtue avec la membrane semi-perméable,
les fibres incorporées dans le tissu non tissé sont uniquement des fibres synthétiques organiques, et
les fibres synthétiques organiques contiennent un constituant de fibre principal et une fibre de liant, et un ratio de mélange de la fibre de constituant principal par rapport à la somme de la fibre de constituant principal et de la fibre de liant {fibre de constituant principal/(fibre de constituant principal + fibre de liant)} est de 50 % en masse ou plus et inférieur à 100 % en masse.

2. Tissu non tissé pour support de membrane semi-perméable selon la revendication 1, où le tissu non tissé, avant d'être soumis à un traitement de pressage à chaud, a une structure en couche unique.

3. Tissu non tissé pour support de membrane semi-perméable selon l'une quelconque des revendications 1 à 2, où, lorsque le tissu non tissé devant être revêtu avec la membrane semi-perméable est divisé, dans une direction d'épaisseur, en une région de couche revêtue sur une face sur laquelle la membrane semi-perméable doit être déposée, une région de couche centrale, et une région de couche non revêtue sur une face opposée à la face sur laquelle doit être déposée la membrane semi-perméable, un degré de fusion thermique des fibres synthétiques organiques dans la région de la couche centrale est inférieur à un degré de fusion thermique des fibres synthétiques organiques dans la région de la couche revêtue et la région de la couche non revêtue.

4. Tissu non tissé pour support de membrane semi-perméable selon l'une quelconque des revendications 1 à 3, où les fibres synthétiques organiques comportent une fibre de constituant principal, et la fibre de constituant principal est une espèce de fibre de constituant principal polyester.
